# DEMANDE DE BREVET EUROPEEN

(11) **EP 3 043 004 A1**
(43) Date de publication de la demande: **13.07.2016**
(21) Numéro de dépôt: 16150549.0
(22) Date de dépôt: 08.01.2016
(51) Int. Cl.: E04D 13/08, F03B 13/00

(54) **SYSTÈME D'ALIMENTATION D'UNE TURBINE À PARTIR D'UNE DESCENTE D'EAU PLUVIALE**

(30) Priorité: 09.01.2015 FR 1550182
(71) Demandeur: Cuzin, Jean-Yves, 38510 Arandon (FR); Tournes, Emeline, 38510 Arandon (FR)
(72) Inventeur: Cuzin, Jean-Yves, 38510 Arandon (FR); Tournes, Emeline, 38510 Arandon (FR)
(74) Mandataire: Myon, Gérard Jean-Pierre

(57) **Abrégé**

Ce système d'alimentation d'au moins une turbine comprend au moins une descente (4) d'eau pluviale, une buse de concentration (12) de l'écoulement d'eau pluviale, cette buse étant fixée en sortie de la descente d'eau pluviale, et une vanne d'alimentation sélective de la buse en eau pluviale, cette vanne étant commandée en fonction du niveau d'eau pluviale dans la descente d'eau pluviale. La vanne (13) comprend un obturateur (16) de la buse (12) de concentration, cet obturateur (16) étant mobile en translation, le long d'un axe essentiellement vertical, entre au moins trois positions distinctes comportant une position d'obturation de la buse et des première et deuxième positions d'ouverture de la buse, définissant respectivement une première section (242) de passage et une deuxième section (122) de passage, un dispositif de commande (15 ; 200) de la position de l'obturateur, ce dispositif étant configuré pour déplacer l'obturateur (16) entre ses au moins trois positions en fonction du niveau d'eau pluviale.

## Description

La présente invention concerne un système d'alimentation d'une turbine à partir d'une descente d'eau pluviale d'une maison ou d'un immeuble.

Dans le domaine des énergies renouvelables, il est connu d'utiliser une turbine utilisant une énergie cinétique dont le renouvellement naturel est assez rapide, afin de produire une énergie mécanique, qui peut alors être convertie en énergie électrique par un alternateur. L'énergie électrique produite est également appelée énergie renouvelable lorsque les sources d'où elle est originaire sont considérées inépuisables. En particulier, il est connu d'installer des turbines hydrauliques qui utilisent l'énergie cinétique des courants marins ou fluviaux, ainsi que d'installer des éoliennes pour utiliser l'énergie cinétique du vent. L'installation de ces turbines induit des coûts très importants qui ne sont pas à la portée d'un particulier ou d'une institution publique, telle qu'une mairie.

A ce sujet, il est également connu d'installer des turbines hydrauliques dans des conduites d'égouts d'une ville afin d'utiliser l'énergie cinétique de l'eau des égouts. Toutefois, du fait de la présence dans les conduites d'égouts d'eaux très turbides, les pales et/ou les pièces mobiles de la turbine sont sujets à un phénomène d'érosion important. Le coût de l'entretien de ces dispositifs est donc très élevé.

On connaît également le système d'alimentation décrit dans GB 2 463 496 A pour un écoulement d'eau pluviale. Ce système comporte au moins une descente d'eau pluviale et une buse de concentration de l'écoulement d'eau pluviale, cette buse étant fixée en sortie de la descente d'eau pluviale, et une vanne d'alimentation sélective de la buse en eau pluviale. Ce système a pour inconvénient qu'il ne permet pas d'assurer une adaptation au débit d'eau qui s'écoule, ce qui cause des débordements d'eau en cas de forte pluie.

C'est à ces inconvénients qu'entend plus particulièrement remédier l'invention en proposant un nouveau système d'alimentation d'une turbine hydraulique permettant une adaptation au débit d'eau qui entre dans le système et qui nécessite de peu de maintenance et dont le coût reste à la portée d'un particulier, d'une collectivité locale ou d'une petite entreprise.

Dans cet esprit, l'invention concerne un système d'alimentation d'au moins une turbine, ce système comprenant au moins une descente d'eau pluviale, une buse de concentration de l'écoulement d'eau pluviale, cette buse étant fixée en sortie de la descente d'eau pluviale, et une vanne d'alimentation sélective de la buse en eau pluviale, cette vanne étant commandée en fonction du niveau d'eau pluviale dans la descente d'eau pluviale. La vanne comprend un obturateur de la buse de concentration, cet obturateur étant mobile en translation, le long d'un axe essentiellement vertical, entre au moins trois positions distinctes comportant une position d'obturation de la buse et des première et deuxième positions d'ouverture de la buse, définissant respectivement une première section de passage et une deuxième section de passage, un dispositif de commande de la position de l'obturateur, ce dispositif étant configuré pour déplacer l'obturateur entre ses au moins trois positions en fonction du niveau d'eau pluviale.

Grâce à l'invention, la turbine est alimentée à partir des eaux pluviales dont le renouvellement naturel est très fréquent tout au cours d'une année. De plus, un tel système d'alimentation peut être installé dans tout bâtiment déjà pourvu d'un système de gouttières et descente d'eaux pluviales et s'avère économique, en comparaison aux systèmes connus. Le déplacement de l'obturateur entre ses deux positions d'ouverture permet d'adapter le débit de l'écoulement de l'eau dans la descente en fonction de la quantité d'eau qui entre dans le système.

Selon des aspects avantageux mais non obligatoires de l'invention, un tel système d'alimentation d'une turbine comprend une ou plusieurs des caractéristiques suivantes, prises selon toute combinaison techniquement admissible :
- Le système est tel que :
   - le dispositif de commande comprend :
      - un accumulateur d'eau pluviale, disposé à l'intérieur de la descente d'eau pluviale, et
      - eau moins un flotteur,
   - l'obturateur et l'accumulateur sont suspendus ensemble au flotteur, et
   - l'obturateur est solidaire en translation verticale avec l'accumulateur.
- Le dispositif de commande comporte au moins un capteur de détection du niveau d'eau pluviale dans la descente, une unité de traitement recevant un signal de mesure du au moins un capteur, un actionneur commandable, disposé à l'intérieur de la descente d'eau pluviale et relié à l'obturateur par un mécanisme d'entraînement en translation le long de l'axe essentiellement vertical, l'unité de traitement étant configurée pour commander l'actionneur en fonction du signal de mesure du niveau d'eau reçu depuis le au moins un capteur.
- Le mécanisme d'entraînement en translation comporte une crémaillère solidaire de l'obturateur et un pignon engrené avec la crémaillère et mis en rotation par l'actionneur.
- Le mécanisme d'entraînement en translation comporte un câble solidaire de l'obturateur et d'un enrouleur mis en rotation par l'actionneur et sur lequel vient s'enrouler le câble.
- Le mécanisme d'entraînement en translation comporte un système bielle-manivelle relié à l'obturateur et mis en rotation par l'actionneur.
- Le dispositif de commande comporte deux capteurs de détection du niveau d'eau pluviale dans la descente configurés pour mesurer deux niveaux d'eau distincts, l'unité de traitement commandant l'actionneur en fonction des signaux reçus depuis ces deux capteurs.
- Le système est tel que :
   - L'obturateur comprend un pointeau externe creux et un pointeau interne,
   - Le pointeau interne est en appui contre un siège intérieur du pointeau externe et le pointeau externe est en appui contre un siège intérieur de la buse, lorsque l'obturateur est dans la position d'obturation,
   - Le pointeau interne est décalé du siège du pointeau externe et le pointeau externe est en appui contre le siège de la buse, lorsque l'obturateur est dans sa première position d'ouverture,
   - Le pointeau interne est décalé du siège du pointeau externe et le pointeau externe est décalé du siège de la buse, lorsque l'obturateur est dans sa deuxième position d'ouverture.
- Le pointeau externe est suspendu au pointeau interne et l'obturateur comprend des moyens de charge élastique du pointeau externe contre le siège de la buse.
- La première section de passage à une aire inférieure à la deuxième section de passage.
- Le système comprend une deuxième descente d'eau pluviale, une deuxième buse de concentration et une deuxième vanne commandée d'alimentation sélective de la deuxième buse, et la deuxième vanne comprend un obturateur de la buse de concentration, cet obturateur étant mobile en translation, le long d'un axe essentiellement vertical, entre au moins trois positions distinctes comportant une position d'obturation de la buse et des première et deuxième positions d'ouverture de la buse, définissant respectivement une première section de passage et une deuxième section de passage, un dispositif de commande de la position de l'obturateur, ce dispositif étant configuré pour déplacer l'obturateur entre ses au moins trois positions en fonction du niveau d'eau pluviale.
- Le système comprend une deuxième descente d'eau pluviale dépourvue de la buse et de la vanne commandée et servant à l'évacuation d'un trop-plein d'eau pluviale de la première descente d'eau pluviale.

L'invention sera mieux comprise et d'autres avantages de celle-ci apparaîtront plus clairement à la lumière de la description qui va suivre, de trois modes de réalisation d'un système d'alimentation d'une turbine, donnée uniquement à titre d'exemple non limitatif et faite en référence aux dessins annexés, sur lesquels :
- la figure 1 est une représentation schématique d'un système d'alimentation d'une turbine à partir d'une descente d'eau pluviale, conforme à un premier mode de réalisation de l'invention ;
- la figure 2 est une vue à plus grande échelle de l'encadré II à la figure 1 ;
- la figure 3 est une vue à plus grande échelle de l'encadré III à la figure 1, lorsque un obturateur est dans une position d'obturation ;
- la figure 4 est une vue analogue à la figure 3, lorsque l'obturateur est dans une première position d'ouverture ;
- la figure 5 est une vue analogue à la figure 3, lorsque l'obturateur est dans une deuxième position d'ouverture ;
- la figure 6 est une vue analogue à la figure 1 d'un système conforme à un deuxième mode de réalisation de l'invention ; et
- les figures 7 et 8 sont des vues analogues aux figures, respectivement 1 et 3, d'un système conforme à un troisième mode de réalisation de l'invention.

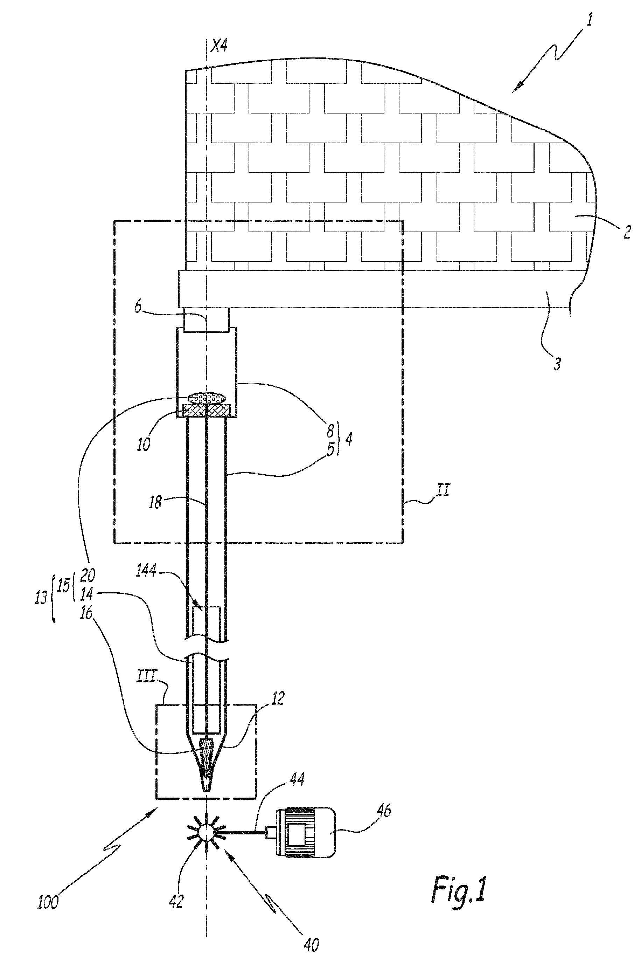

Sur la figure 1, un édifice 1 comporte une installation de production de courant électrique, un toit 2, une gouttière 3 et une ouverture 6 de la gouttière. L'édifice 1 est, par exemple, une maison privée, un bâtiment public, tel qu'une mairie, ou un établissement industriel.

L'installation de production de courant électrique comprend une turbine 40 et un système 100 d'alimentation de la turbine 40.

Le système d'alimentation 100 comprend une descente 4 d'eau pluviale. On note 5 la paroi circulaire de la descente 4.

De façon connue en soi, le toit 2 est destiné à protéger l'édifice 1 contre les intempéries et l'humidité, par exemple contre la pluie. La gouttière 3 est configurée pour recueillir les eaux de pluie à base des pentes du toit 2 et permet l'écoulement des eaux pluviales via l'ouverture 6 dans un réservoir 8 de la conduite 4. L'eau pluviale qui s'écoule dans la descente 4 forme un flux d'eau sur la surface intérieure de la paroi circulaire 5.

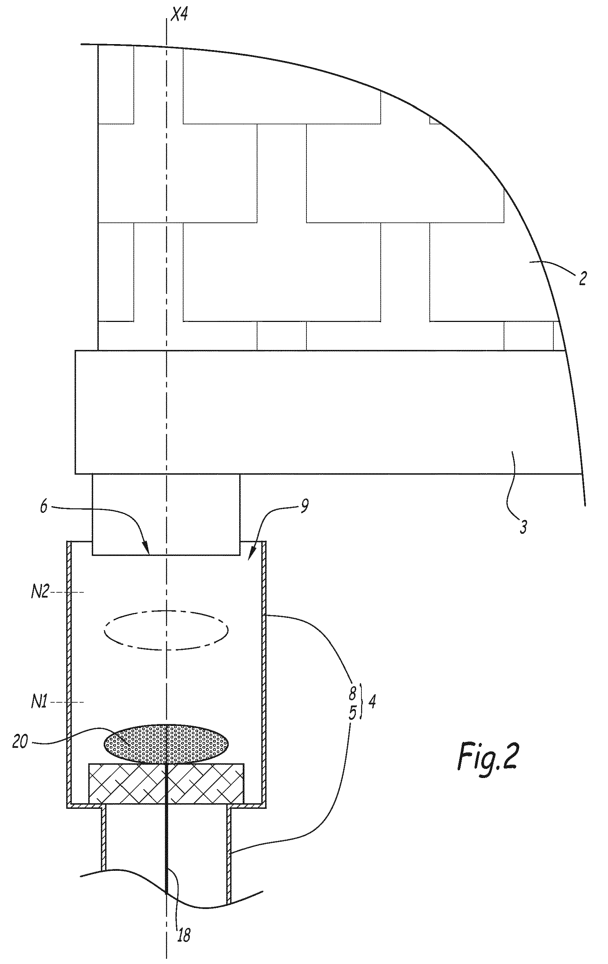

Comme représenté schématiquement à la figure 2, l'ouverture 6 de la gouttière 3 est agencée dans un alésage supérieur 9 du réservoir 8, de manière à ce que l'eau pluviale puisse s'écouler dans la descente 4.

On note X4 un axe longitudinal et central à la descente d'eau 4 et selon lequel on définit la direction du flux d'eau pluvial qui s'écoule dans la descente 4. On note également un premier niveau N1 et une deuxième niveau N2 de l'eau pluviale dans le réservoir 8.

La descente d'eau pluviale 4 comporte également, à la base du réservoir 8, un filtre 10 configuré pour purifier l'eau et empêcher des particules solides de taille importante de s'écouler dans la descente d'eau pluviale 4.

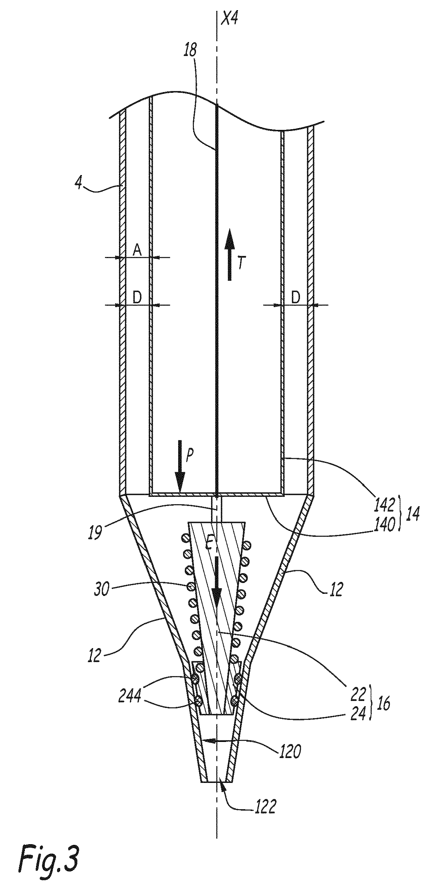

Le système d'alimentation 100 comprend, en outre, une buse 12 de concentration de l'écoulement d'eau pluviale. Comme représenté à la figure 3, la buse 12 est fixée en sortie de la descente 4 et est configurée pour déterminer un rétrécissement du volume d'écoulement du flux d'eau pluvial selon l'axe X4. On note 120 un siège intérieur de la buse 12 et 122 une ouverture de sortie de la buse destinée à laisser s'écouler le flux d'eau pluviale vers l'aval. L'ouverture 122 a un diamètre d12 qui varie en fonction de la hauteur de la descente d'eau pluviale 4 et de la surface du toit 2. Par exemple, le diamètre d12 est compris entre 5 et 20 mm, de préférence égal à 10 mm.

Le système 100 comprend, en outre, une vanne 13 d'alimentation sélective en eau pluviale de l'ouverture 122. La vanne 13 est commandée en fonction du niveau d'eau pluviale dans la descente 4.

La vanne 13 comprend un corps formé par la buse 12.

La vanne 13 comprend un obturateur 16 de la buse de concentration 12. L'obturateur 16 est mobile, selon l'axe X4, entre trois positions, à savoir, une position d'obturation de la buse 12, une première position d'ouverture de la buse 12, dite également position d'ouverture partielle, et une deuxième position d'ouverture de la buse 12, dite également position d'ouverture totale. En pratique, la position d'ouverture partielle définit une première section de passage et la position d'ouverture totale définit une deuxième section de passage par l'écoulement de l'eau. Les première et deuxième sections de passage sont différentes. En particulier, la première section est inférieure à la deuxième section.

La vanne 13 comprend également un accumulateur 14 de l'eau pluviale disposé à l'intérieur de la descente 4. On note 140 une base, 142 une paroi périphérique et 144 une ouverture supérieure de l'accumulateur 14. L'ouverture 144 est configurée pour permettre à l'accumulateur 14 de recueillir l'eau pluviale.

L'accumulateur 14 est positionné au voisinage de la buse 12. De plus, l'accumulateur 14 est séparé de la paroi circulaire 5, de façon à ce que l'eau pluviale puisse couler sur la surface intérieure de la paroi circulaire 5, autour de l'accumulateur 14 et atteindre la buse 12. En d'autres termes, la paroi 142 de l'accumulateur 14 est disposée à une distance D non nulle de la paroi circulaire 5 de la descente 4. La distance D est comprise entre 1 et 5 mm. On note A une espace annulaire qui se crée entre la paroi circulaire 5 et l'accumulateur 14. L'espace A possède, dans l'exemple, une section supérieure aux première et deuxième sections de passage.

La vanne 13 comprend également un flotteur 20, positionné dans le réservoir 8, et une corde 18, solidaire de la base 140 de l'accumulateur 14 et du flotteur 20.

En variante, une chaîne ou une tige rigide ou semi-rigide peuvent être utilisées, à la place de la corde 18, pour suspendre l'accumulateur au flotteur 20.

Ainsi, l'accumulateur 14 et le flotteur 20 forment un dispositif de commande 15 de la position de l'obturateur 16.

L'obturateur 16 est solidaire en translation verticale, selon l'axe X4, avec l'accumulateur 14. En pratique, l'obturateur 16 est l'accumulateur 14 sont solidarisés via une tige 19 qui est fixée à la base 140 de l'accumulateur 14. L'obturateur 16 et l'accumulateur 14 sont donc suspendus ensemble au flotteur 20.

L'obturateur 16 comprend un pointeau interne 22 et un pointeau externe creux 24. Les pointeaux 22 et 24 sont configurés pour créer une étanchéité dans la buse 12 et accumuler l'eau pluviale dans la descente 4. Les pointeaux 22 et 24 ont, en pratique, une section tronconique, centrée sur l'axe X4 et divergente vers le haut.

On note 240 un siège intérieur du pointeau externe 24 et 242 une ouverture de sortie du pointeau 24, destinée à laisser s'écouler le flux d'eau pluviale vers l'aval. L'ouverture 242 a un diamètre d24 qui varie en fonction de la hauteur de la descente d'eau pluviale 4 et de la surface du toit 2. Par exemple, le diamètre d24 est compris entre 5 et 15 mm, de préférence égal à 8 mm.

Lorsque l'obturateur 14 est dans sa position d'obturation, comme représenté à la figure 3, le pointeau interne 22 est en appui contre le siège intérieur 240 du pointeau externe 24 et le pointeau externe 24 est en appui contre le siège intérieur 120 de la buse 12, de manière à créer une étanchéité entre les pointeaux 22 et 24 et entre le pointeau 24 et la buse 12.

Le pointeau externe 24 est équipé de deux joints circulaires 244 disposés autour de sa surface externe et configurés pour améliorer l'étanchéité entre la buse 12 et le pointeau 24.

Les pointeaux 22 et 24 sont mobiles, en translation selon l'axe X4, entre la position d'obturation, la première position d'ouverture partielle et la deuxième position d'ouverture totale.

L'obturateur 16 comprend un ressort de rappel 30 disposé autour du pointeau interne 22 et solidaire, d'une part, du pointeau interne 22 et, d'autre part, du pointeau externe 24. Le ressort 30 est configuré pour charger élastiquement le pointeau externe 24 contre le siège 120 de la buse 12, de manière à assurer l'étanchéité entre les pièces 12 et 24 et empêcher le flux d'eau pluviale de s'écouler entre le pointeau externe 24 et la buse 12.

Le ressort 30 est apte à exercer sur le pointeau externe 24 un effort de rappel E parallèle à l'axe X4 et dirigé vers le bas. Grâce au ressort 30, le pointeau externe 24 est suspendu au pointeau interne 22.

La turbine 40 est positionnée, selon l'axe X4, au-dessous de la buse 12. La turbine 40 est configurée pour transformer une énergie cinétique de l'eau en une énergie mécanique. En particulier, le flux d'eau pluviale sortant de la buse 12 est apte à mettre en rotation une roue 42 de la turbine 40. De façon connue en soi, la roue 42 est solidaire d'un arbre 44 d'entraînement d'un alternateur électrique 46. L'alternateur 46 est configuré pour alimenter une batterie ou un réseau de distribution de l'édifice 1.

Le fonctionnement du système d'alimentation 100 est décrit ci-après :
Au repos, le système 100 se trouve dans sa position d'obturation décrite ci-dessus.

Lors d'une précipitation, la gouttière 3 collecte les eaux pluviales et dirige un flux d'eau pluviale en direction de l'ouverture 6 et de la descente 4. L'eau pluviale est alors forcée à tomber dans le réservoir 8 et ensuite dans la descente d'eau pluviale 4, selon l'axe X4.

La buse 12 est obturée par les deux pointeaux 22 et 24 qui assurent l'étanchéité initiale du système d'alimentation 100. En d'autres termes, les pointeaux 22 et 24 permettent d'accumuler l'eau pluviale dans la descente 4.

Le niveau d'eau pluviale qui s'accumule dans la descente 4 augmente jusqu'à atteindre le niveau de l'ouverture 144. L'eau remplit ainsi l'accumulateur 14, de façon à augmenter le poids P de l'accumulateur 14, qui est transmis via la tige 19 au pointeau interne 22. En pratique, l'accumulateur 14 rempli d'eau pluviale pousse le pointeau interne 22 en appui contre le pointeau externe 24 et le pointeau interne en appui contre la buse 12.

Lors d'une forte précipitation, le niveau d'eau accumulé dans la descente 4 atteint le réservoir 8 où se trouve le flotteur 20. Le flotteur 20 se déplace vers le haut, selon l'axe X4, car il est soulevé par l'eau pluviale, et met en tension la corde 18. On note T la tension de la corde 18 qui résulte de la flottabilité du flotteur 20 et du poids P. En pratique, le flotteur 20, par l'intermédiaire de la corde 18, tire vers le haut, selon l'axe X4, l'accumulateur 14 et l'obturateur 16 qui lui est solidaire via la tige 19.

Dans un premier temps, la tension T exercée par la corde 18 sur l'accumulateur 14 est inférieure au poids P. L'obturateur 16 reste dans sa position d'obturation de la buse 12.

Lorsque la quantité d'eau pluviale dans le réservoir 8 augmente et atteint le premier niveau N1, la tension T exercée par le flotteur 20 sur la corde 18 est sensiblement égale, voire supérieure, au poids P. En pratique, la tension T soulève l'accumulateur 14 et provoque l'extension maximale du ressort 30. Le pointeau interne 22 est décalé du siège 240 du pointeau externe 24, alors que le pointeau externe 24 reste en appui contre le siège 120 de la buse 12 grâce à l'effort E.

On note A1 un espace annulaire qui se crée entre le pointeau interne 22 et le siège 240 du pointeau externe 24. L'espace A1 a, dans l'exemple, une section supérieure à celle de l'ouverture de sortie 242 du pointeau externe 24. Ainsi, l'ouverture 242 du pointeau 24 définit la première section de passage à la position d'ouverture partielle.

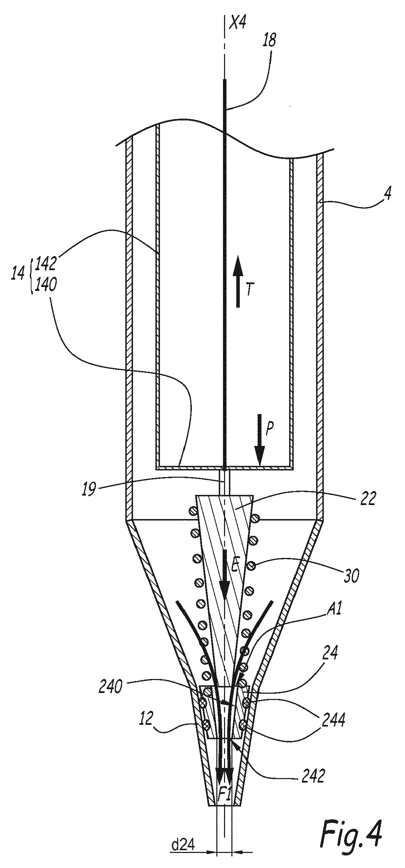

Lorsque le système d'alimentation 100 est dans sa première position d'ouverture partielle, comme représenté à la figure 4, l'étanchéité initiale entre les pointeaux 22 et 24 est interrompue et l'eau pluviale accumulée dans la descente 4 peut s'écouler contre le siège 240 du pointeau externe 24, de manière à constituer un flux F1 d'eau pluviale sortant de l'ouverture 242 du pointeau 24 et ensuite de l'ouverture 120 de la buse 12. La section du flux d'eau pluviale F1 est définie par l'ouverture 242 et a, par voie de conséquence, un diamètre d24.

Le flux F1 percute la roue 42 de la turbine 40 qui est mise en rotation. Comme décrit ci-dessus, la rotation de la roue est transmise à l'arbre 44 de l'alternateur 46. De façon connue en soi, la quantité d'énergie électrique produite par l'alternateur 46 est fonction de la vitesse de rotation de la roue 42 de la turbine 40. Cette rotation est fonction du flux d'eau pluviale qui sort de la buse 12 et, qui dans la position d'ouverture partielle du système 100, a un diamètre égal à d24.

Suite à l'ouverture partielle du système d'alimentation 100, le niveau d'eau dans le réservoir 8 peut descendre, rester sensiblement constant, ou augmentée.

Dans le cas où le niveau d'eau descend en dessous du premier niveau N1, la tension T exercée par la corde 18 devient inférieure au poids P et le pointeau interne 22 vient à nouveau en appui contre le siège 240 du pointeau externe 24, de façon à recréer l'étanchéité de la buse 12 et, par voie de conséquence, de façon à interrompre le flux d'eau pluviale F1. En d'autres termes, le système est à nouveau dans sa position d'obturation.

Dans le cas où le niveau d'eau pluviale dans la descente 4 reste sensiblement constant, le flux F1 sortant de la buse 12 reste également constant, ainsi que la production d'énergie électrique.

Au contraire, lorsqu'une très forte précipitation induit une augmentation du niveau d'eau pluviale dans le réservoir 8, le flotteur 20 atteint le deuxième niveau N2 d'eau pluviale et exerce, via la corde 18, une tension T qui est supérieure au poids P. En pratique, le flotteur 20 tire vers le haut, selon l'axe X4, l'accumulateur 14 et le pointeau 22 et, le ressort 30 étant en extension maximale, soulève également le pointeau externe 24. Le pointeau interne 22 est décalé du siège 240 du pointeau externe 24 et le pointeau externe 24 est décalé du siège 120 de la buse 12.

On note A2 un espace annulaire qui se crée entre le pointeau externe 24 et le siège 120 de la buse 12. L'espace A2 a, dans l'exemple, une section supérieure à celle de l'ouverture de sortie 122 de la buse 12. Ainsi, l'ouverture 122 de la buse 12 définit la deuxième section de passage à la position d'ouverture totale.

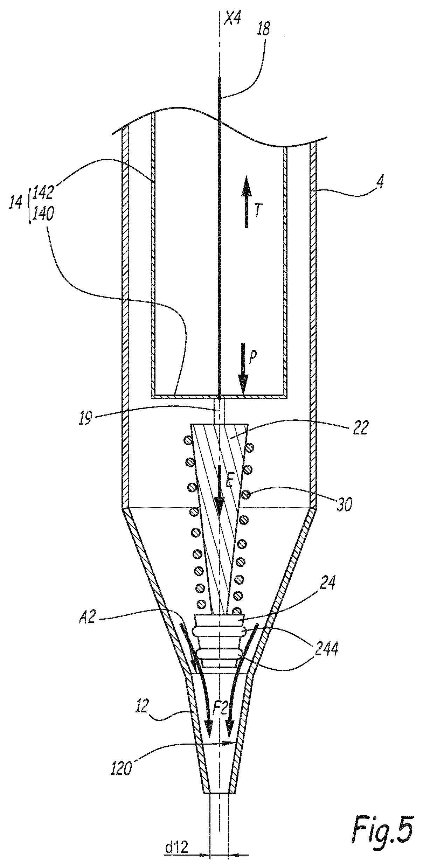

Lorsque le système d'alimentation 100 est dans sa deuxième position d'ouverture totale, comme représenté à la figure 5, l'eau pluviale accumulée dans la descente 4 est libre de s'écouler dans l'ouverture 122 de la buse 12, ce qui détermine un flux d'eau pluviale F2 de diamètre d12. Le flux F2 ayant un débit supérieur au flux F1, il induit une vitesse de rotation supérieure de la roue 42. L'énergie électrique produite par l'alternateur 46 est donc supérieure, lorsque le système d'alimentation 100 est dans sa position d'ouverture totale, à celle qu'elle est lorsqu'il est dans sa position d'ouverture partielle.

Suite à l'ouverture totale du système d'alimentation 100, le niveau d'eau dans le réservoir 8 peut rester sensiblement constant ou descendre.

Dans le cas où le niveau d'eau reste sensiblement constant, le flux F2 sortant de l'ouverture 122 reste également constant, ainsi que la production d'énergie électrique.

Dans le cas où le niveau d'eau pluviale descend au-dessous du deuxième niveau N2, le système d'alimentation 100 passe de la deuxième position d'ouverture totale à la première position d'ouverture partielle. En d'autres termes, le pointeau externe 24 vient à nouveau en appui contre le siège 122 de la buse 12.

De cette manière, le système adapte le débit de l'écoulement de l'eau dans la descente 4 en fonction de la quantité d'eau qui entre dans le système 100.

En variante non représentée aux figures, afin d'évacuer un trop plein d'eau pluvial dans la descente 4, le système d'alimentation 100 comprend une deuxième descente 4 d'eau pluviale dépourvue de la buse et de la vanne commandée et servant à l'évacuation d'un trop plein d'eau pluviale de la première descente d'eau pluviale 4.

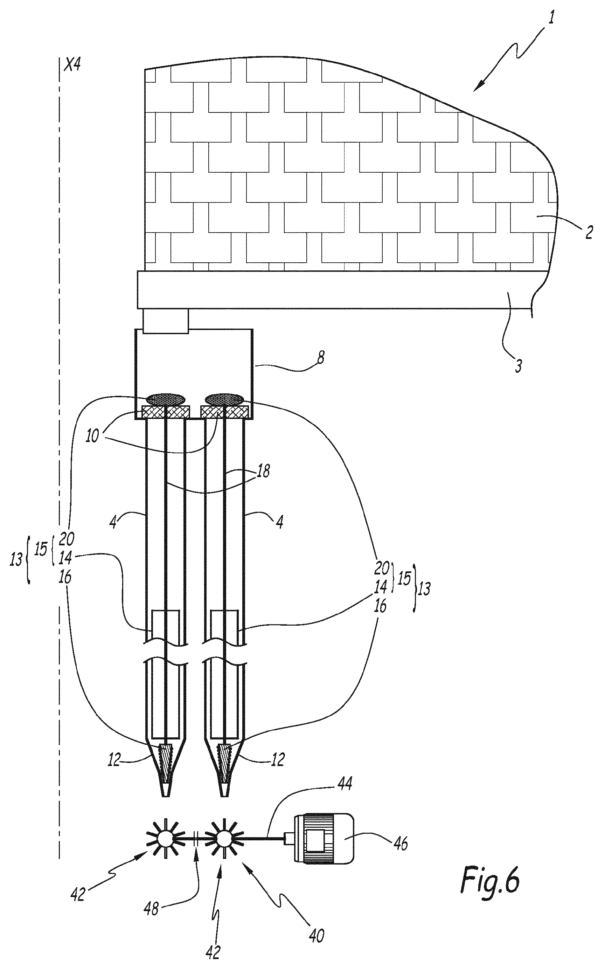

Selon un deuxième mode de réalisation de l'invention qui est représenté à la figure 6, le système d'alimentation 100 comprend une deuxième descente 4 d'eau pluviale, une deuxième buse 12 de concentration et une deuxième vanne 13 commandée d'alimentation sélective de la buse 12. La vanne 13 de la deuxième descente 4 comprend un obturateur 16, un accumulateur 14 et un flotteur 20. Les pièces 14, 16 et 20 sont telles que décrites ci-dessus. En d'autres termes, les vannes 13 sont identiques et le fonctionnement de la deuxième vanne 13 est tel que décrit ci-dessus. En pratique, la deuxième descente 4 permet d'utiliser le trop plein d'eau pluviale de la première descente 4 pour augmenter la production d'énergie électrique. Selon ce mode de réalisation, l'installation de production de courant électrique comprend également une deuxième roue 42 laquelle est fixée sur l'arbre 44, lequel est équipé d'un embrayage 48 configuré pour permettre des rotations différentes des deux roues 42.

En variante, la deuxième roue 42 est fixée à un deuxième arbre d'entraînement d'un deuxième alternateur.

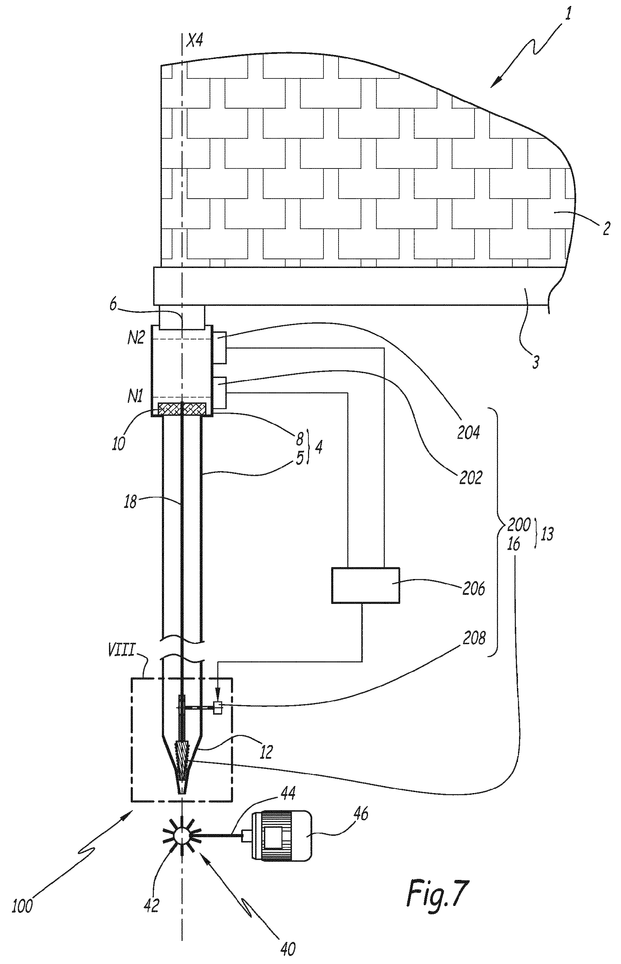

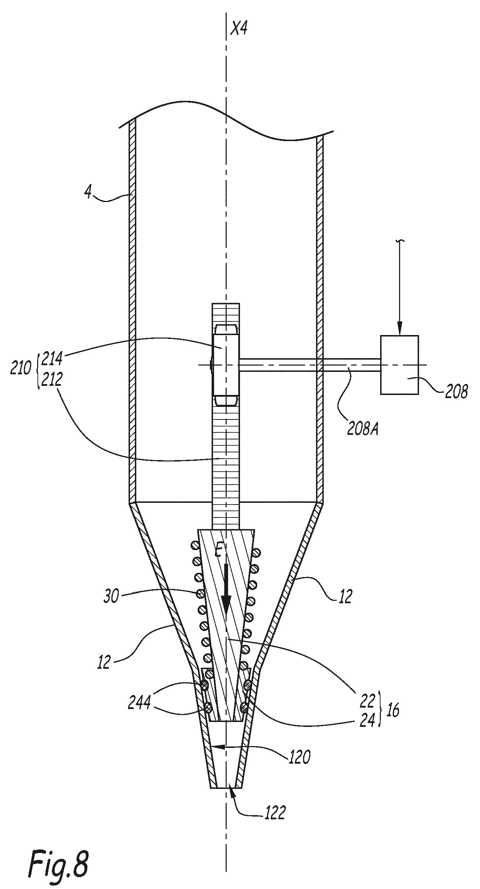

Selon un troisième mode de réalisation de l'invention qui est représenté aux figures 7 et 8, le système d'alimentation 100 comprend, à la la place du dispositif 15, un dispositif 200 de commande de la position de l'obturateur 16. Ce dispositif 200 comporte des capteurs 202 et 204, une unité de traitement 206, et un actionneur 208. Les capteurs 202 et 204 sont configurés pour mesurer le niveau de l'eau dans la descente d'eau pluviale 4. Par exemple, les capteurs 202 et 204 sont placés dans le réservoir 8. Le capteur 202 émet un signal de mesure lorsque le niveau de l'eau dépasse le niveau N1. Le capteur 204 émet un signal de mesure lorsque le niveau de l'eau dépasse le niveau N2.

L'unité de traitement 206 est configurée pour commander le fonctionnement de l'actionneur 208 en fonction des signaux émis par les capteurs 202 et 204 de manière à déplacer l'obturateur 16 entre ses positions d'obturation et d'ouverture totale ou partielle.

L'actionneur 208 est ici un moteur configuré pour mettre en rotation un arbre moteur autour de son axe. Cet actionneur 208 est ici placé à l'extérieur de la descente 4. En variante, l'actionneur 208 peut être placé à l'intérieur de cette descente 4.

Le dispositif 200 comporte en outre un mécanisme 210 d'entraînement en translation de l'obturateur 16 le long de l'axe X4. Le mécanisme 210 lie mécaniquement l'arbre de sortie 208A de l'actionneur 208 à l'obturateur 16. Ici, le mécanisme 210 comporte une crémaillère 212 solidaire du pointeau interne 22 de l'obturateur 16 et s'étendant essentiellement le long de l'axe X4. Le mécanisme 210 comprend également un pignon 214 monté solidaire de l'arbre 208A de l'actionneur 208 en rotation autour de l'axe du moteur. Ce pignon 214 engrène avec la crémaillère 212. Ainsi, lorsque l'actionneur 208 est mis en marche, il commande un déplacement en translation de l'obturateur 16 le long de l'axe X4.

En variante, le mécanisme 210 peut être remplacé par un câble solidaire de l'obturateur 16, par exemple formé par la corde 18, et d'un enrouleur mobile en rotation autour de l'arbre moteur de l'actionneur 208 et sur lequel vient s'enrouler le câble.

Dans une autre variante, le mécanisme 210 comporte un système bras-manivelle qui inclut un disque entraîné en rotation par l'arbre 208A, un bras solidaire de l'obturateur 16 et qui s'étend essentiellement le long de l'axe X4, et une bielle qui relie le disque à ce bras. La rotation du disque entraîne un déplacement selon l'axe X4 du bras et donc de l'axe X4.

Selon une autre variante, le nombre de capteurs 202, 204 est différent. Par exemple, un seul capteur est utilisé. Par exemple, le capteur comporte un flotteur relié par un bras rigide à une articulation solidaire d'une paroi interne du réservoir 8. Le capteur comporte en outre un détecteur qui mesure l'angle entre le bras rigide et la paroi. Ce détecteur comporte par exemple un ou plusieurs contacteurs ménagés au niveau de l'articulation et qui sont sélectivement activés ou inactivés en fonction de la position du bras. Le capteur est préalablement étalonné pour associer deux positions du bras aux niveaux N1 et N2. Alternativement, plus de deux capteurs peuvent être utilisés si des niveaux d'eau additionnels sont définis en plus des niveaux N1 et N2.

Les modes de réalisation et les variantes envisagées ci-dessus peuvent être combinés entre eux pour générer de nouveaux modes de réalisation de l'invention.

## Revendications

1. Système d'alimentation (100) d'au moins une turbine (40), ce système comprenant :
- au moins une descente (4) d'eau pluviale,
- une buse (12) de concentration de l'écoulement d'eau pluviale, cette buse étant fixée en sortie de la descente (4) d'eau pluviale, et
- une vanne (13) d'alimentation sélective de la buse en eau pluviale, cette vanne étant commandée en fonction du niveau (N1, N2) d'eau pluviale dans la descente d'eau pluviale, **caractérisé en ce que** la vanne (13) comprend :
- un obturateur (16) de la buse (12) de concentration, cet obturateur (16) étant mobile en translation, le long d'un axe (X4) essentiellement vertical, entre au moins trois positions distinctes comportant :
• une position d'obturation de la buse et
• des première et deuxième positions d'ouverture de la buse, définissant respectivement une première section (242) de passage et une deuxième section (122) de passage,
- un dispositif de commande (15 ; 200) de la position de l'obturateur, ce dispositif étant configuré pour déplacer l'obturateur (16) entre ses au moins trois positions en fonction du niveau (N1, N2) d'eau pluviale.

2. Système selon la revendication 1, **caractérisé en ce que** :
- le système de commande comprend :
• un accumulateur (14) d'eau pluviale, disposé à l'intérieur de la descente (4) d'eau pluviale, et
• au moins un flotteur (20),
- l'obturateur et l'accumulateur sont suspendus ensemble au flotteur, et
- l'obturateur est solidaire en translation verticale avec l'accumulateur.

3. Système selon la revendication 1, **caractérisé en ce que** le dispositif de commande (200) comporte :
• au moins un capteur (202, 204) de détection du niveau d'eau pluviale dans la descente,
• une unité de traitement (206) recevant un signal de mesure du au moins un capteur,
• un actionneur (208) commandable, disposé à l'intérieur de la descente (4) d'eau pluviale et relié à l'obturateur (16) par un mécanisme (210) d'entraînement en translation le long de l'axe (X4) essentiellement vertical, l'unité de traitement étant configurée pour commander l'actionneur en fonction du signal de mesure du niveau d'eau (N1, N2) reçu depuis le au moins un capteur.

4. Système selon la revendication 3, **caractérisé en ce que** le mécanisme (210) d'entraînement en translation comporte une crémaillère (212) solidaire de l'obturateur (16) et un pignon (214) engrené avec la crémaillère et mis en rotation par l'actionneur.

5. Système selon la revendication 3, **caractérisé en ce que** le mécanisme (210) d'entraînement en translation comporte un câble solidaire de l'obturateur (16) et d'un enrouleur mis en rotation par l'actionneur (208) et sur lequel vient s'enrouler le câble.

6. Système selon la revendication 3, **caractérisé en ce que** le mécanisme (210) d'entraînement en translation comporte un système bielle-manivelle relié à l'obturateur (16) et mis en rotation par l'actionneur (208).

7. Système selon l'une des revendications 3 à 6, **caractérisé en ce que** le dispositif de commande (200) comporte deux capteurs (202, 204) de détection du niveau d'eau pluviale dans la descente configurés pour mesurer deux niveaux d'eau distincts, l'unité de traitement (206) commandant l'actionneur (208) en fonction des signaux reçus depuis ces deux capteurs.

8. Système selon l'une des revendications précédentes, **caractérisé en ce que** :
- l'obturateur (16) comprend un pointeau externe (24) creux et un pointeau interne (22),
- le pointeau interne est en appui contre un siège (240) intérieur du pointeau externe et le pointeau externe est en appui contre un siège (120) intérieur de la buse (12), lorsque l'obturateur est dans la position d'obturation,
- le pointeau interne est décalé du siège du pointeau externe et le pointeau externe est en appui contre le siège de la buse, lorsque l'obturateur est dans sa première position d'ouverture, et
- le pointeau interne est décalé du siège du pointeau externe et le pointeau externe est décalé du siège de la buse, lorsque l'obturateur est dans sa deuxième position d'ouverture.

9. Système selon la revendication 8, **caractérisé en ce que** le pointeau externe (24) est suspendu au pointeau interne (22) et l'obturateur (46) comprend des moyens (30) de charge élastique du pointeau externe contre le siège (120) de la buse (12).

10. Système selon l'une des revendications précédentes, **caractérisé en ce que** la première section de passage (242) a une aire inférieure à la deuxième section de passage (122).

11. Système selon l'une des revendications précédentes, **caractérisé en ce qu'**il comprend une deuxième descente (4) d'eau pluviale, une deuxième buse de concentration (12) et une deuxième vanne (13) commandée d'alimentation sélective de la deuxième buse, **en ce que** la deuxième vanne comprend :
- un obturateur (16) de la buse (12) de concentration, cet obturateur (16) étant mobile en translation, le long d'un axe essentiellement vertical, entre au moins trois positions distinctes comportant :
• une position d'obturation de la buse et
• des première et deuxième positions d'ouverture de la buse, définissant respectivement une première section (242) de passage et une deuxième section (122) de passage,
- un dispositif de commande (15 ; 200) de la position de l'obturateur, ce dispositif étant configuré pour déplacer l'obturateur (16) entre ses au moins trois positions en fonction du niveau (N1, N2) d'eau pluviale.

12. Système selon l'une des revendications 1 à 10, **caractérisé en ce qu'**il comprend une deuxième descente (4) d'eau pluviale dépourvue de la buse et de la vanne commandée et servant à l'évacuation d'un trop-plein d'eau pluviale de la première descente (4) d'eau pluviale.
